(19) Europäisches Patentamt / European Patent Office / Office européen des brevets

(11) **EP 3 272 494 B1**

(12) **FASCICULE DE BREVET EUROPEEN**

(45) Date de publication et mention
de la délivrance du brevet:
**21.11.2018 Bulletin 2018/47**

(51) Int Cl.:
**B29C 49/48** *(2006.01)* **B29C 49/20** *(2006.01)*
**B29C 49/78** *(2006.01)* B29K 67/00 *(2006.01)*

(21) Numéro de dépôt: **17305962.7**

(22) Date de dépôt: **20.07.2017**

(54) **UNITE DE MOULAGE DE RECIPIENTS, EQUIPEE D'UN DISPOSITIF DE BOXAGE A CHEMISE RAPPORTEE**

SPRITZGUSSEINHEIT FÜR BEHÄLTER, DIE MIT EINER BOXENHERSTELLUNGSVORRICHTUNG MIT EINSATZMANTEL AUSGESTATTET IST

CONTAINER MOULDING UNIT, PROVIDED WITH A BOXING DEVICE WITH ADDED JACKET

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.07.2016 FR 1656947**

(43) Date de publication de la demande:
**24.01.2018 Bulletin 2018/04**

(73) Titulaire: **Sidel Participations
76930 Octeville-sur-Mer (FR)**

(72) Inventeur: **Penet, Laurent
76930 Octeville-sur-mer (FR)**

(74) Mandataire: **Siloret, Patrick
Sidel Participations
Avenue de la Patrouille de France
CS60627 Octeville-sur-mer
76059 Le Havre Cedex (FR)**

(56) Documents cités:
**EP-A1- 0 626 248     JP-A- H0 866 956**

**Description**

L'invention a trait au formage des récipients, notamment des bouteilles, des flacons ou encore des bidons, à partir d'ébauches en matière thermoplastique (tel que le polytéréphtalate d'éthylène ou PET), et plus précisément au formage des récipients munis de réserves en creux telles que des poignées intégrées.

Rappelons que la fabrication des récipients comprend généralement une opération de soufflage qui se déroule dans un moule dont la paroi définit une cavité au sein de laquelle est introduite l'ébauche, cette dernière venant, au cours du soufflage, épouser la paroi sous l'effet de la pression gazeuse élevée qui règne dans l'ébauche, préalablement chauffée de manière à permettre sa déformation plastique.

Le document JP H08 66959 décrit une unité de moulage pour le formage d'une pièce muni d'une réserve formée en creux vers l'intérieur de la pièce, cette unité de moulage comprenant :

- un moule muni d'une paroi latérale définissant une cavité à l'empreinte d'au moins une partie du récipient, cette paroi latérale étant pourvue d'un logement débouchant dans la cavité ;
- un dispositif de boxage comprenant un insert monté en translation par rapport à la paroi latérale suivant un axe transversal entre une position rétractée dans laquelle l'insert est au moins en partie escamoté dans le logement, et une position déployée dans laquelle l'insert fait au moins en partie saillie dans la cavité hors du logement, un actionneur solidaire de l'insert et muni d'un piston;
- le dispositif de boxage comprenant une chemise rapportée, montée dans un évidement complémentaire formé dans la paroi latérale et fixée à celle-ci, et dans laquelle le piston est monté en translation, la chemise définissant une chambre subdivisée par le piston en une demi-chambre arrière et une demi-chambre avant; et
- le dispositif de boxage comprenant un circuit fluidique de commande du déplacement du piston, qui inclut au moins un conduit primaire d'alimentation de la demi-chambre arrière.

Certains récipients peuvent être munis de réserves formées en creux vers l'intérieur du récipient et réalisées dans un but esthétique (par ex. création de galbes) ou fonctionnel (réalisation d'une poignée de préhension du récipient).

Pour y parvenir, on emploie généralement une unité de moulage munie d'un insert mobile initialement escamoté dans la paroi du moule et déployé en présence du récipient en cours de formation dans le moule pour repousser la matière lorsque celle-ci atteint la paroi, comme illustré dans la demande internationale WO 2010/063900 (Sidel Participations).

La technique décrite dans ce document, conçue pour un moule de type linéaire (qui comprend deux demi-moules montés en translation l'un par rapport à l'autre), est difficilement transposable aux moules de type portefeuille (dans lequel les demi-moules sont montés en rotation l'un par rapport à l'autre), en raison de l'encombrement important, notamment radial, du dispositif de boxage commandant le mouvement de l'insert.

En outre, l'insert est monté à l'extrémité d'une paire de tiges relativement longues. Les efforts résistants auxquels est soumis l'insert n'étant pas nécessairement parallèles aux axes des tiges, les résultantes transversales de ces efforts soumettent les tiges à des efforts de flexion générant de la fatigue mécanique et susceptibles également de mettre à mal l'étanchéité du guidage.

Un premier objectif est de proposer une unité de moulage de récipients munis d'une réserve en creux, ayant au moins l'une des qualités suivantes :

- fiabilité accrue.
- meilleure compacité,
- meilleure efficacité.

A cet effet, il est proposé une unité de moulage pour le formage d'un récipient muni d'une réserve en creux vers l'intérieur du récipient, cette unité de moulage comprenant :

- un moule muni d'une paroi latérale définissant une cavité à l'empreinte au moins partielle du récipient, cette paroi latérale étant pourvue d'un logement débouchant dans la cavité ;
- un dispositif de boxage comprenant :

    o un insert monté en translation par rapport à la paroi latérale suivant un axe transversal entre une position rétractée dans laquelle l'insert est au moins en partie escamoté dans le logement, et une position déployée dans laquelle l'insert fait au moins en partie saillie dans la cavité hors du logement,
    o un actionneur solidaire de l'insert et muni d'un piston ;
    l'unité de moulage étant caractérisée en ce que le dispositif de boxage comprend :
    o une chemise rapportée, montée dans un évidement complémentaire formé dans la paroi latérale et fixée à celle-ci, et dans laquelle le piston est monté en translation, la chemise définissant une chambre subdivisée par le piston en une demi-chambre arrière et une demi-chambre avant, l'évidement, la chemise et le piston étant asymétriques de rotation autour de l'axe transversal,

o un circuit fluidique de commande du déplacement du piston, qui inclut au moins un conduit primaire d'alimentation de la demi-chambre arrière, qui communique avec celle-ci par plusieurs ouvertures dans la chemise, distribuées sur la périphérie de celle-ci.

La chemise rapportée fait office de pièce d'usure ; elle évite que la paroi du moule elle-même s'use sous l'effet des frottements du piston. Il en résulte notamment une meilleure fiabilité du moule. De plus, la forme asymétrique de révolution évite la rotation inopinée de l'insert et accroît la précision de son guidage, au bénéfice de la qualité du récipient produit. En outre, la distribution, de préférence uniforme, des ouvertures de communication de la demi-chambre arrière avec le conduit primaire favorise un bon équilibre des pressions dans celle-ci, ce qui améliore également la précision du guidage de l'insert.

Diverses caractéristiques supplémentaires peuvent être prévues, seules ou en combinaison :

- l'évidement, la chemise et le piston sont plus hauts que larges ;
- l'évidement, la chemise et le piston présentent un contour ovale de grand axe sensiblement vertical ;
- la chemise comprend au moins deux ouvertures diamétralement opposées suivant un axe vertical ;
- la chemise comprend quatre ouvertures réparties à 90° autour de l'axe transversal ;
- la chemise comprend une paroi de fond et un cylindre qui fait saillie de la paroi de fond et se termine par un rebord, la paroi de fond et le cylindre définissant intérieurement la chambre ;
- la chemise est pourvue, sur une face périphérique externe du cylindre, d'une rainure arrière qui débouche dans la chambre par les ouvertures, et le conduit fluidique primaire est pratiqué dans la paroi du moule et débouche dans l'évidement au droit de la rainure arrière ;
- le circuit fluidique de commande du déplacement du piston inclut un conduit secondaire d'alimentation de la demi-chambre avant, qui communique avec celle-ci par des échancrures pratiquées dans le rebord ;
- la chemise est pourvue, sur une face périphérique externe du cylindre, d'une rainure avant qui débouche dans la chambre par les échancrures, et le conduit fluidique secondaire est percé dans la paroi du moule et débouche dans l'évidement au droit de la rainure avant ;
- l'évidement est séparé du logement par une cloison percée d'un alésage, et l'actionneur est pourvu d'une tige montée en translation dans cet alésage et sur laquelle est fixé l'insert ;
- l'insert est fixé sur la tige par vissage ;
- l'insert est fixé sur la tige au moyen d'une vis traversant le piston et la tige et venant en prise hélicoïdale avec un trou taraudé pratiqué dans une face arrière de l'insert ;
- l'insert est immobilisé en rotation par rapport à l'actionneur au moyen d'une goupille ;
- le ou chaque conduit fluidique débouche sur une face supérieure du moule ;
- le dispositif de boxage comprend une paire de silentblocs rapportés, fixés sur l'actionneur de part et d'autre du piston (on rappelle que le terme "Silentbloc" (au singulier) est une marque française de la société HUTCHINSON SA, d'où est issu un nom commun utilisé pour désigner (cf. dictionnaire Larousse, par exemple) un dispositif souple de fixation ou d'amortissement entre deux éléments : l'emploi des termes "silentbloc" ou "silentblocs" dans la présente demande renvoie à un tel dispositif) ;
- les silentblocs sont réalisés en polyuréthane ;
- la chemise est fixée à la paroi latérale du moule au moins au moyen d'une bride, comprenant un corps fixé sur le moule par vissage, et d'une languette faisant saillie du corps et prenant appui contre une face externe de la chemise ;
- la chemise est réalisée en acier ;
- l'actionneur est réalisé en aluminium ;
- l'unité de moulage est équipée d'une paire de dispositifs de boxage symétriques dont les inserts sont placés en regard l'un de l'autre.

D'autres objets et avantages de l'invention apparaîtront à la lumière de la description d'un mode de réalisation, faite ci-après en référence aux dessins annexés dans lesquels :

- la **FIG.1** est une vue en coupe et en perspective montrant une unité de moulage pourvue d'une paire de dispositifs de boxage ;
- la **FIG.2** est une vue en coupe et en perspective éclatée montrant, par l'intérieur, un demi-moule et son dispositif de boxage associé ;
- la **FIG.3** est une vue en coupe et en perspective éclatée montrant, par l'extérieur, un demi-moule et son dispositif de boxage associé ;

- la **FIG.4** est une vue en perspective et en coupe brisée montrant le demi-moule de la **FIG.2** et de la **FIG.3** ;
- la **FIG.5** est une vue en coupe horizontale montrant l'unité de moulage, prise au niveau des dispositifs de boxage ;
- la **FIG.6** est une vue de détail en coupe verticale montrant un dispositif de boxage en position rétractée de l'insert, pendant le formage d'un récipient ;
- la **FIG.7** est une vue similaire à la **FIG.6,** montrant l'insert en position déployée ;
- la **FIG.8** est une vue de détail en coupe horizontale montrant le dispositif de boxage en position rétractée de l'insert, pendant le formage d'un récipient ;
- la **FIG.9** est une vue similaire à la **FIG.8,** montrant l'insert en position déployée ;
- la **FIG.10** est une vue en perspective éclatée montrant une partie de l'unité de moulage ;
- la **FIG.11** est une vue de détail en coupe horizontale illustrant le dimensionnement du moule et de l'insert ;
- la **FIG.12** est une vue en coupe partielle verticale du moule, montrant les deux inserts en regard en position déployée ;
- la **FIG.13** est une vue en perspective d'un récipient formé dans une unité de moulage telle qu'illustrée sur les figures précédentes ;
- la **FIG.14** est une vue en coupe horizontale du récipient de la **FIG.13,** suivant le plan de coupe XIV-XIV ;
- la **FIG.15** est une vue en coupe en perspective éclatée montrant, par l'intérieur, un demi-moule et son dispositif de boxage associé, selon une variante de réalisation ;
- la **FIG.16** est une vue de détail en coupe horizontale montrant le dispositif de boxage de la **FIG.15** en position déployée de l'insert ;
- la **FIG.17** est une vue en perspective, par l'avant, d'un insert équipant le demi-moule des **FIG.15** et **FIG.16** ;
- la **FIG.18** est une vue en perspective, par l'arrière, de l'insert de la **FIG.17.**

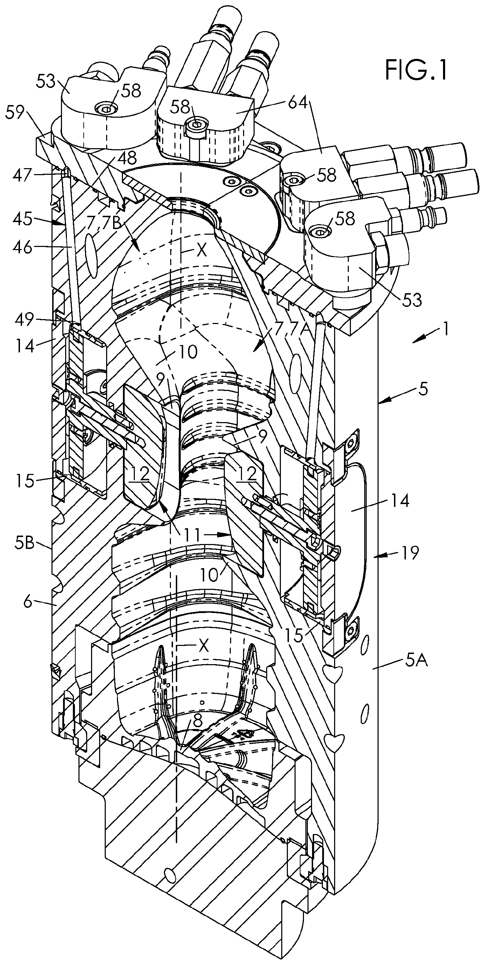

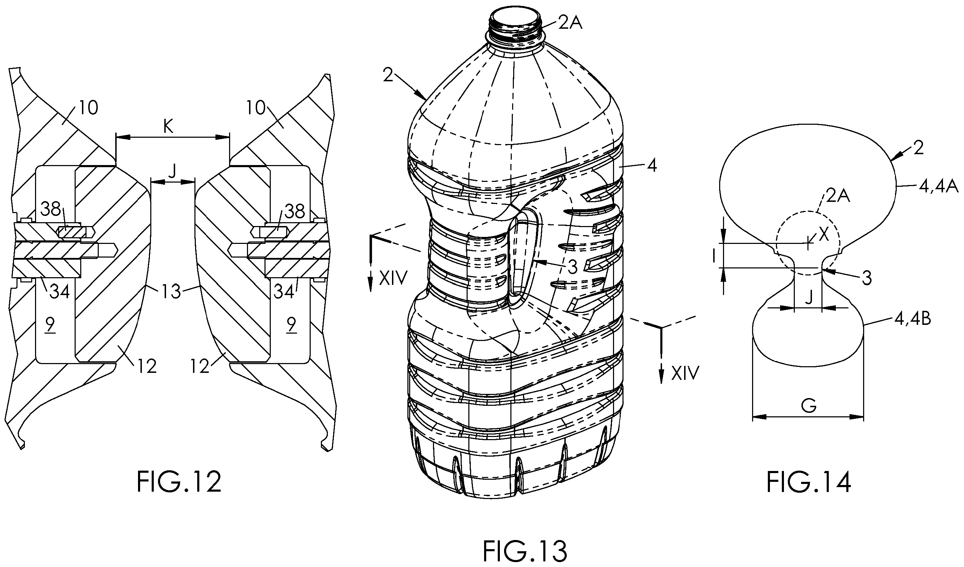

Sur la **FIG.1** est représentée, en coupe et en perspective, une unité **1** de moulage pour le formage, à partir d'une ébauche (typiquement une préforme), d'un récipient **2** (tel qu'une bouteille ou un bidon, comme illustré sur la **FIG. 13**) muni d'une réserve **3** formée en creux vers l'intérieur du récipient **2**. Le récipient **2** est pourvu, de manière classique, d'un corps **4**, d'un fond et d'un col **2A** qui s'ouvre à l'opposé du fond. Dans l'exemple illustré sur les **FIG.13** et **FIG.14,** la réserve **3** en creux est une poignée formée dans le corps **4** du récipient pour en faciliter la préhension.

Dans ce cas, le corps **4** est, au niveau de la poignée, subdivisé en une partie **4A** avant et une partie **4B** arrière. Comme illustré sur la **FIG.14,** la partie **4A** avant et la partie **4B** ont des formes bombées. La partie **4B** arrière est la partie qui est destinée à être logée dans la paume de l'utilisateur lorsque celui-ci saisit le récipient individuellement.

L'unité **1** de moulage comprend, en premier lieu, un moule **5** muni d'une paroi **6** latérale qui définit une cavité **7** à l'empreinte d'une partie du récipient **2**. En l'espèce, la cavité **7** est à l'empreinte du corps **4** du récipient **2**, le moule **5** comprenant en outre un fond **8** à l'empreinte du fond du récipient **2**. Le moule **5** est réalisé en métal, par exemple en acier ou en aluminium (ce terme couvrant également les alliages d'aluminium). La cavité **7** (et donc le récipient **2**) s'étend suivant un axe **X** principal qui définit une direction verticale. Tout plan perpendiculaire à l'axe **X** principal est dit horizontal.

Selon un mode de réalisation illustré sur les dessins, la paroi **6** latérale comprend deux demi-moules **5A, 5B** définissant chacun une demi-empreinte **7A, 7B** du corps **4** du récipient **2** et montés en rotation l'un par rapport à l'autre autour d'un axe commun formé par une charnière, entre :

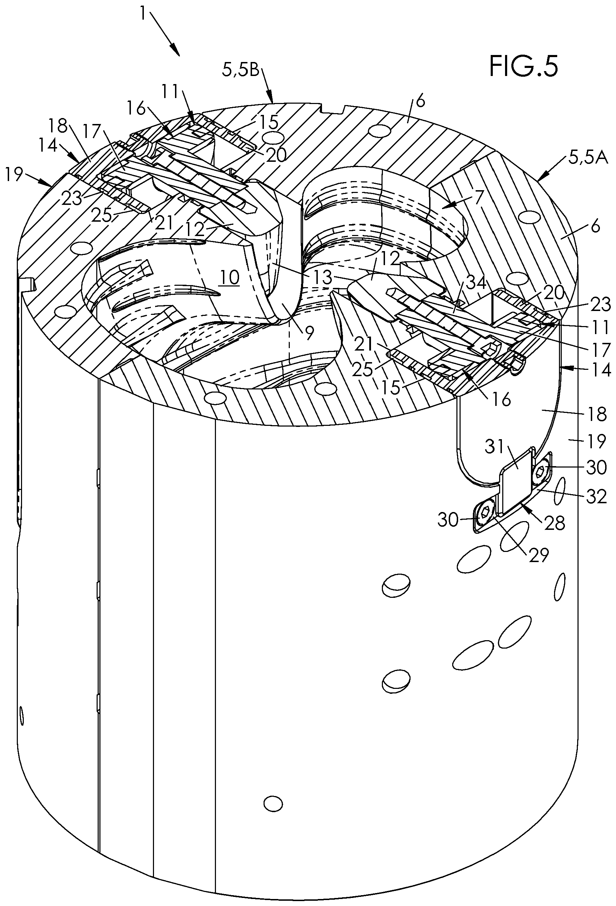

- une position ouverte, dans laquelle les demi-moules **5A, 5B** sont écartés angulairement l'un de l'autre pour permettre l'introduction de l'ébauche et l'évacuation du récipient **2** formé,
- une position fermée (illustrée sur la **FIG.1** et sur la **FIG.5**), dans laquelle les demi-moules **5A, 5B** sont appliqués l'un contre l'autre et emprisonnent entre eux le fond **8** de moule, pour former ainsi la cavité **7** et définir l'empreinte du récipient **2** à former.

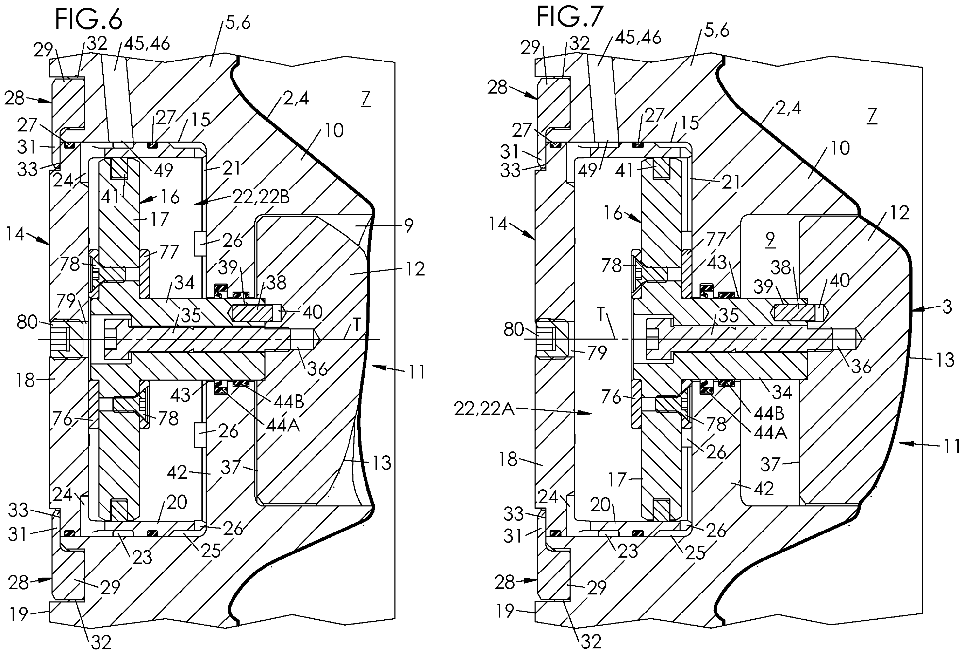

La paroi **6** latérale est pourvue d'un logement **9** qui s'ouvre dans la cavité **7**. Comme on le voit notamment sur la **FIG.6** et sur la **FIG.7,** ce logement **9** est formé en creux dans une excroissance **10** formant une saillie vers l'intérieur de la cavité **7** et formant une partie de la contre-empreinte de la réserve **3** en creux définissant la poignée.

Selon un mode de réalisation illustré notamment sur la **FIG.1** et sur la **FIG.5,** correspondant à un récipient **2** pourvu de deux réserves **3** en creux, de préférence symétriques par rapport à un plan central de symétrie générale du récipient **2** et formant conjointement la poignée, chaque demi-moule **5A, 5B** est pourvu d'un logement **9** s'ouvrant dans la demi-empreinte **7A, 7B** et formé en creux dans une excroissance **10** qui forme une saillie vers l'intérieur de la cavité **7**.

L'unité **1** de moulage comprend en deuxième lieu, et pour chaque logement **9,** un dispositif **11** de boxage. Le terme « boxage » désigne une technique de modelage local de la matière par repoussage au moyen d'une pièce mobile, pratiquée pendant le formage du récipient **2** (et plus précisément initiée pendant les phases de présoufflage et de soufflage du récipient **2**).

Chaque dispositif **11** de boxage comprend un insert **12,** de forme complémentaire d'un logement **9** et reçu dans celui-ci. Chaque insert **12** présente une face **13** frontale à l'empreinte d'une partie locale (c'est-à-dire de faible superficie relative) du récipient **2,** et plus précisément du fond de la réserve **3** en creux. La face **13** frontale est destinée à venir repousser la matière du récipient **2** pour compléter l'empreinte de la réserve **3** en creux, comme il sera expliqué ci-après. L'insert **12** est avantageusement réalisé en aluminium.

Comme on le voit sur la **FIG.1** et sur la **FIG.5**, l'unité **1** de moulage est équipée d'une paire de dispositifs **11** de boxage (de préférence symétriques) dont les inserts **12** sont placés en regard l'un de l'autre.

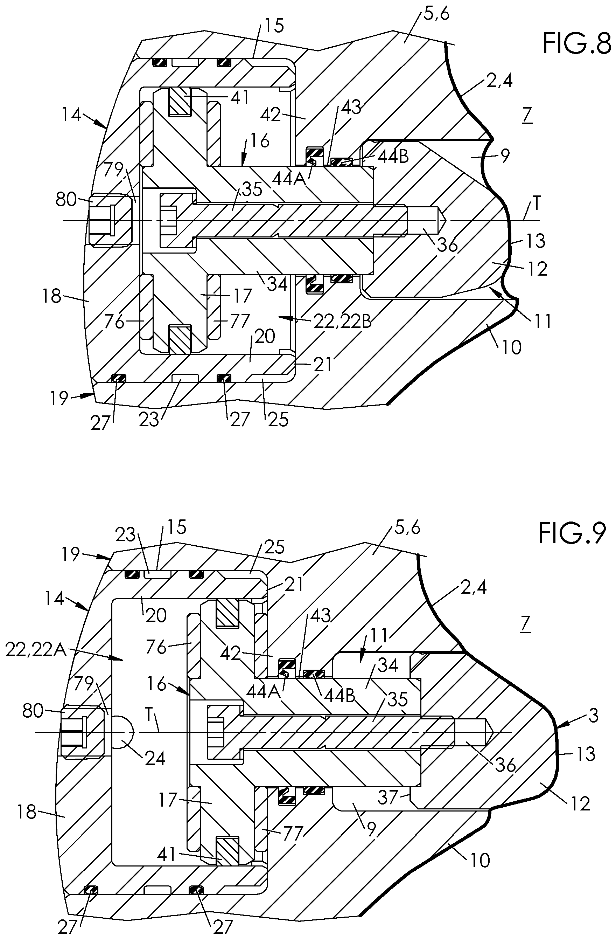

Chaque insert **12** est monté en translation par rapport à la paroi **6** latérale (c'est-à-dire, dans l'exemple illustré, par rapport à chaque demi-moule **5A, 5B**) suivant un axe **T** transversal entre une position rétractée (**FIG.6** et **FIG.8**) dans laquelle l'insert **12** est au moins en partie escamoté dans le logement **9,** et une position déployée (**FIG.7** et **FIG. 9**) dans laquelle l'insert **12** fait au moins en partie saillie dans la cavité **7** hors du logement **9**.

Plus précisément, et comme cela est bien visible sur la **FIG.6** et sur la **FIG.8**, en position rétractée de l'insert **12**, la face **13** frontale est incluse dans le logement **9** et ne dépasse pas de l'excroissance **10**, tandis qu'en position déployée de l'insert **12**, la face **13** frontale fait saillie dans la cavité **7** et s'étend dans le prolongement de l'excroissance **10** pour compléter avec celle-ci l'empreinte de la réserve **3** formée en creux dans le récipient **2**.

Cette configuration n'est pas exclusive. Ainsi, selon un autre mode de réalisation, en position rétractée de l'insert **12**, la face **13** frontale de l'insert **12** est située en saillie par rapport au bord interne de l'excroissance **10**. Selon encore un autre mode de réalisation, en position rétractée de l'insert **12**, la face **13** frontale de l'insert **12** se trouve dans le prolongement du bord interne de l'excroissance **10**.

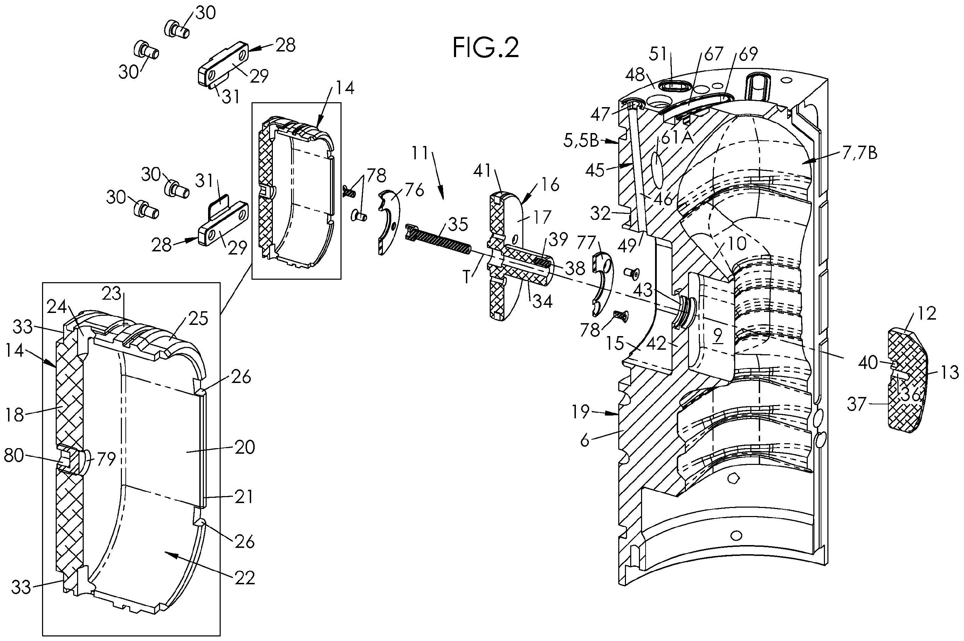

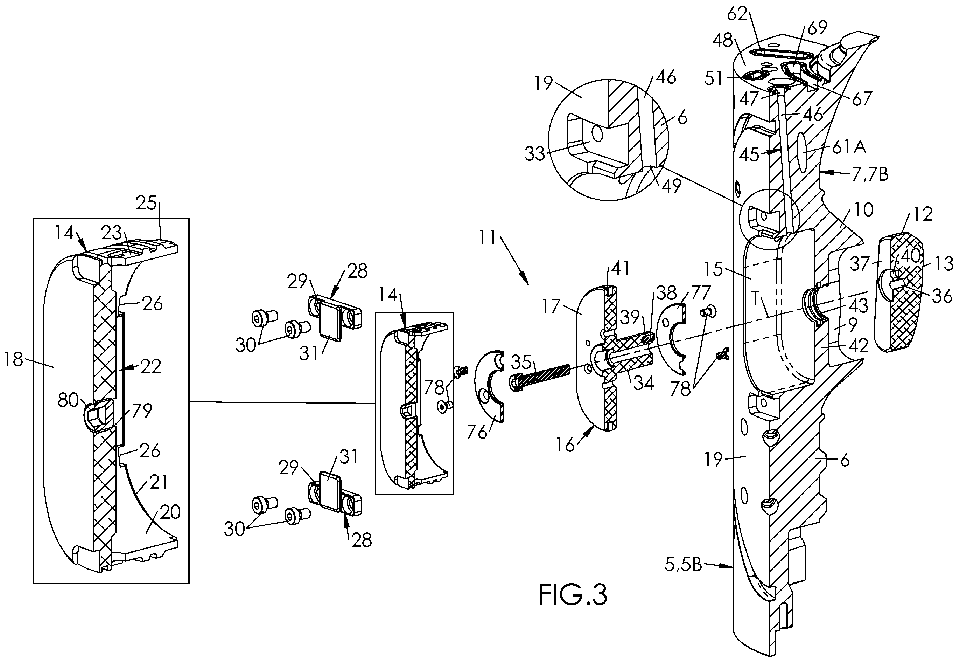

Comme on le voit bien sur les **FIG.2** et **FIG.3,** l'insert **12** (comme son logement **9**) présente un contour asymétrique de révolution autour de l'axe **T,** ce qui bloque la rotation de l'insert **12** autour de celui-ci. Plus précisément, l'insert **12** est, de préférence, plus haut (suivant l'axe **X** général du moule **5**) que large (dans un plan horizontal) Dans l'exemple illustré, l'insert **12** présente un contour ovale de grand axe sensiblement vertical.

Comme illustré sur les dessins, chaque dispositif **11** de boxage comprend par ailleurs une chemise **14** rapportée, montée dans un évidement **15** complémentaire creusé dans la paroi **6** latérale (c'est-à-dire, dans l'exemple illustré, dans chaque demi-moule **5A, 5B**) et fixée à celle-ci. La chemise **14** est avantageusement réalisée en acier.

Chaque dispositif **11** de boxage comprend en outre un actionneur **16** solidaire de l'insert **12** pour déplacer celui-ci de sa position rétractée à sa position déployée, et réciproquement, et comprenant à cet effet un piston **17** monté en translation dans la chemise **14**. L'actionneur **16** est de préférence réalisé en aluminium.

Selon un mode de réalisation illustré sur les dessins, et plus particulièrement visible sur les **FIG.6** à **FIG.9,** la chemise **14** comprend une paroi **18** de fond qui, lorsque la chemise **14** est insérée dans son évidement **15**, affleure une face **19** externe du moule **5,** et un cylindre **20** qui fait saillie transversalement de la paroi **18** de fond et se termine par un rebord **21**.

La chemise **14** définit intérieurement une chambre **22** dans laquelle est monté le piston **17**. Comme l'insert **12,** la chemise **14** et l'évidement **15** la recevant, de même que le piston **17,** présentent un contour asymétrique de révolution autour de l'axe **T** transversal, ce qui bloque toute rotation du piston **17** autour de celui-ci, au bénéfice de la précision de guidage en translation de l'insert **12**. Plus précisément, la chemise **14,** son évidement **15** et le piston **17** sont, de préférence, plus hauts (suivant l'axe **X** général du moule **5**) que larges (dans un plan horizontal). Dans l'exemple illustré, la chemise **14,** l'évidement **15** et le piston **17** présentent un contour ovale de grand axe sensiblement vertical.

Le piston **17** subdivise la chambre **22** en une demi-chambre **22A** arrière et une demi-chambre **22B** avant. Dans l'exemple illustré, la demi-chambre **22A** arrière est limitée intérieurement par le piston **17** et extérieurement par la paroi **18** de fond de la chemise **14**. Egalement dans l'exemple illustré, la demi-chambre **22B** avant est limitée extérieurement par le piston **17** et intérieurement par le fond de l'évidement **15**.

La chemise **14** est pourvue, sur une face périphérique externe du cylindre **20,** d'une rainure **23** arrière qui débouche dans la demi-chambre **22A** arrière par plusieurs ouvertures (ici sous forme de perçages) **24** dans la chemise **14,** distribuées sur la périphérie de celle-ci. Dans l'exemple illustré, la chemise **14** est pourvue de deux ouvertures **24** diamétralement opposées, distribuées en l'occurrence suivant un axe vertical. En variante, la chemise **14** pourrait inclure un nombre d'ouvertures **24** supérieur, par exemple quatre ouvertures **24** réparties à 90° (ou différemment) autour de l'axe T transversal.

La chemise **14** est en outre pourvue, sur la face périphérique externe du cylindre **20,** d'une rainure **25** avant qui débouche dans la demi-chambre **22B** avant par plusieurs échancrures **26** pratiquées dans le rebord **21** et distribuées sur la périphérie de la chemise **14**. Dans l'exemple illustré, la chemise **14** est pourvue de six échancrures réparties à environ 60° autour de l'axe **T** transversal.

Des joints **27** montés sur la face externe du cylindre **20,** et comprimés entre celui-ci et l'évidement **15,** assurent l'étanchéité des rainures **23, 25** l'une par rapport à l'autre, et donc des demi-chambres **22A, 22B** l'une par rapport à l'autre.

Après son introduction dans l'évidement **15,** la chemise **14** est fixée à la paroi **6** latérale du moule **5**. Comme cela est visible sur les dessins, et plus particulièrement sur la **FIG.2** et sur la **FIG.3,** la chemise **14** est fixée à la paroi **6** latérale au moyen d'au moins une bride **28** comprenant un corps **29** fixé sur le moule **5** au moyen de vis **30,** et une languette **31** faisant saillie du corps **29** et prenant appui, par l'extérieur, contre la paroi **18** de fond de la chemise **14**. Dans l'exemple illustré, la chemise **14** est fixée à la paroi **6** latérale au moyen d'une paire de brides **28** montées de part et d'autre, verticalement, de la chemise **14**.

Pour éviter toute excroissance sur la face **19** externe du moule **5,** chaque bride **28** vient avantageusement se loger dans une réserve **32** en creux formée de manière complémentaire dans la paroi **6** latérale du moule **5,** tandis que la languette **31** vient se loger dans un évidement **33** formé dans la paroi **18** de fond de la chemise **14.**

Selon un mode de réalisation illustré sur les dessins, l'actionneur **16** comprend une tige **34** qui s'étend radialement en saillie à partir du piston, et sur laquelle l'insert **12** est fixé, par exemple par vissage.

Plus précisément, dans l'exemple illustré, l'insert **12** est fixé sur la tige **34** au moyen d'une vis **35** traversant le piston **17** et la tige **34** et venant en prise hélicoïdale avec un trou **36** taraudé pratiqué dans une face **37** arrière de l'insert **12,** opposée à la face **13** frontale.

L'insert **12** est avantageusement immobilisé en rotation par rapport à l'actionneur **16** au moyen d'une goupille **38** montée dans un trou **39** pratiqué dans la tige **34** et dont une extrémité en saillie vient se loger dans un trou **40** pratiqué, en regard, dans la face **37** arrière de l'insert **12.**

Comme cela est bien visible sur les **FIG.6** à **FIG.9,** le piston **17** est pourvu d'un segment **41** périphérique rapporté, en contact avec le cylindre **20** et qui, en complément des joints **27,** assure le cloisonnement étanche des deux demi-chambres **22A, 22B.** Le segment **41** est avantageusement réalisé dans un matériau à faible coefficient de frottement, par exemple en bronze ou, de préférence, en polytétrafluoroéthylène (PTFE).

Comme on le voit également sur les **FIG.6** à **FIG.9,** l'évidement **15** se termine, du côté de la cavité **7,** par une cloison **42** qui sépare l'évidement **15** du logement **9** et délimite intérieurement la demi-chambre **22B** avant.

Cette cloison **42** est percée d'un alésage **43** dans lequel la tige **34** de l'actionneur **16** est montée en translation, avec interposition d'un ou plusieurs joints **44A** d'étanchéité qui isolent la demi-chambre **22B** avant du logement **9,** et de préférence également avec interposition d'une ou plusieurs bagues **44B** de guidage. Dans l'exemple illustré, le joint **44A** est un joint dynamique à lèvre. Quant à la bague **44B,** elle peut être réalisée en PTFE (polytétrafluoroéthylène).

Chaque dispositif **11** de boxage comprend un circuit **45** fluidique de commande du déplacement du piston **17,** au moins de sa position rétractée à sa position déployée. Selon un mode de réalisation avantageux, le circuit **45** fluidique est pneumatique, le fluide employé étant un gaz (typiquement de l'air) sous pression.

Chaque circuit **45** comprend à cet effet au moins un conduit **46** fluidique primaire d'alimentation de la chambre **22** (et plus précisément de la demi-chambre **22A** arrière) qui communique avec la chambre **22** (et plus précisément avec la demi-chambre **22A** arrière) par les ouvertures **24.**

En pratique, et comme cela est visible notamment sur les **FIG.1** à **FIG.3, FIG.6, FIG.7** et **FIG.10,** le conduit **46** primaire est percé dans le moule **5** et débouche, par une extrémité **47** amont, sur une face **48** supérieure du moule **5** et, par une extrémité **49** aval, dans l'évidement **15** au droit de la rainure **23** arrière (**FIG.6** et **FIG.7**).

Selon un mode de réalisation illustré sur les dessins, la commande du déplacement du piston **17** est de type double effet, chaque circuit **45** fluidique étant configuré pour commander par ailleurs le déplacement du piston **17** correspondant de sa position déployée à sa position rétractée.

A cet effet, chaque circuit **45** comprend un conduit **50** fluidique secondaire d'alimentation de la demi-chambre **22B** avant, qui communique avec celle-ci par les échancrures **26.**

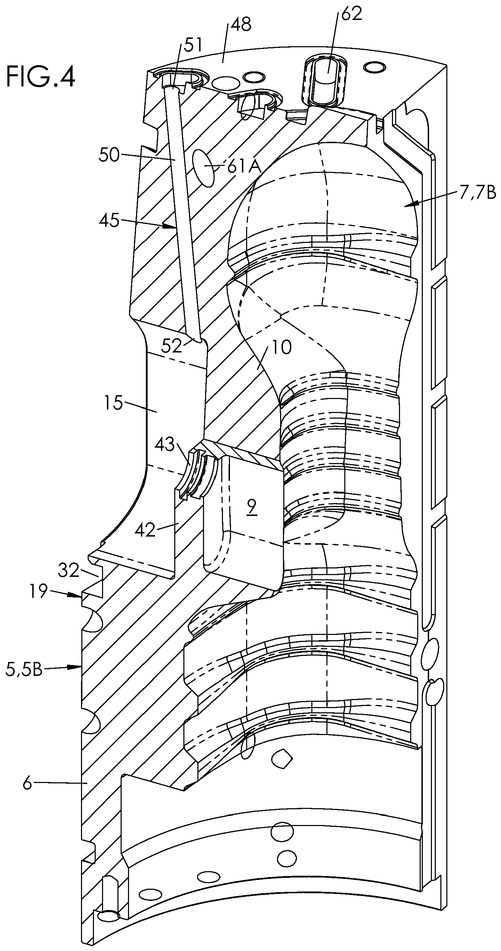

Plus précisément, et comme cela est visible notamment sur la **FIG.4,** le conduit **50** secondaire est percé dans le moule **5** et débouche, par une extrémité **51** amont, sur la face **48** supérieure du moule **5** et, par une extrémité **52** aval, dans l'évidement **15** au droit de la rainure **25** avant.

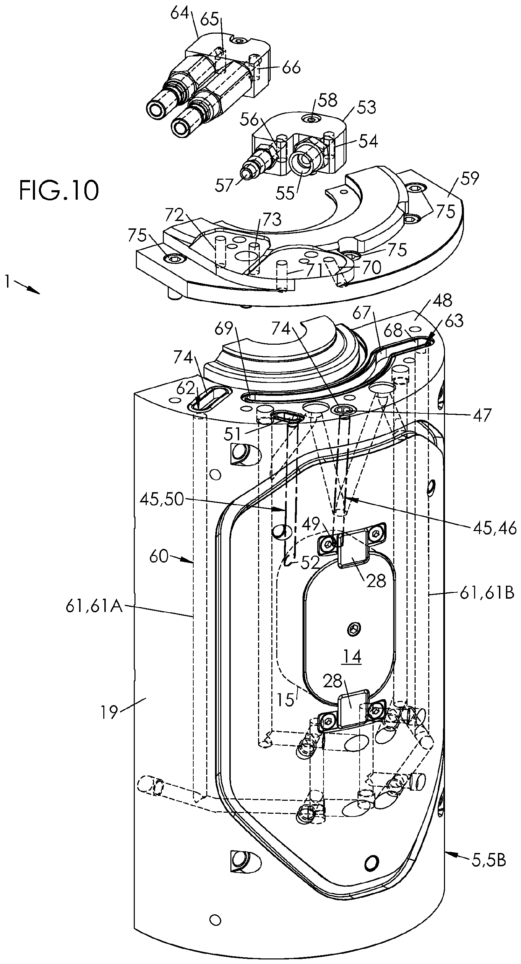

Selon un mode de réalisation illustré sur les dessins, le conduit **46** primaire est pratiqué sensiblement verticalement dans la paroi **6** latérale du moule **5,** tandis que le conduit **50** secondaire est pratiqué obliquement (avec cependant un angle assez faible) dans la paroi **6** latérale du moule **5.** Sur la **FIG.10,** le conduit **46** primaire et le conduit **50** secondaire sont représentés en trait mixte gras.

Comme on le voit sur la **FIG.1** et sur la **FIG.10,** l'unité **1** de moulage comprend un raccord **53** pneumatique d'alimentation en fluide sous pression au moins du conduit **46** primaire. A cet effet, le raccord **53** comprend une arrivée **54** primaire en communication avec l'extrémité **47** amont du conduit **46** primaire. Cette arrivée **54** primaire se présente avantageusement sous forme d'un conduit percé dans le raccord **53,** et qui débouche dans une fiche **55** primaire (ici de type mâle) de branchement à un flexible primaire (non représenté) d'amenée de fluide sous pression.

L'arrivée **54** primaire est, via la fiche **55** primaire et le flexible primaire, de préférence reliée à une source de fluide, typiquement du gaz, à pression élevée, avantageusement supérieure à 20 bars (et par ex. de 40 bars environ). Il peut s'agir de la source utilisée pour le soufflage des récipients, ou bien d'une source de pression autre, générant le cas échéant une pression de valeur différente de la source de soufflage.

Dans l'exemple illustré, où la commande de déplacement du piston **17** est à double effet, et où, outre le conduit **46** primaire, le circuit **45** pneumatique comprend un conduit **50** secondaire d'alimentation de la demi-chambre **22B** avant, le raccord **53** pneumatique comprend une arrivée **56** secondaire en communication avec l'extrémité **51** amont du conduit **50** secondaire. Cette arrivée **56** secondaire se présente avantageusement sous forme d'un conduit percé dans le raccord **53,** et qui débouche dans une fiche **57** secondaire (ici également de type mâle) de branchement à un flexible secondaire (non représenté) d'amenée de fluide sous pression.

L'arrivée **56** secondaire est, via la fiche **57** secondaire et le flexible secondaire, reliée à une source de fluide à pression comparativement plus faible, avantageusement inférieure ou égale à 12 bars (et par ex. de 7 bars environ).

Les extrémités **47, 51** amont des conduits **46, 50** débouchent avantageusement au voisinage l'une de l'autre, de manière à permettre leur branchement conjoint aux sources respectives de fluide sous pression via un unique raccord **53** monté sur la face **48** supérieure du moule **5,** comme illustré sur la **FIG.1.**

Le raccord **53** est fixé sur le moule **5** par encliquetage ou, comme dans l'exemple illustré sur la **FIG.1** et sur la **FIG.10,** au moyen d'au moins une vis **58.**

Selon un mode de réalisation avantageux illustré sur la **FIG.1** et sur la **FIG.10,** l'unité **1** de moulage comprend un couvercle **59** monté sur la face **48** supérieure du moule **5** et interposé entre celle-ci et le raccord **53.**

Comme cela est visible sur la **FIG.10,** l'unité **1** de moulage comprend un circuit **60** fluidique (par ex. hydraulique) de régulation thermique de la paroi **6.** Le fluide employé est avantageusement un liquide, par ex. de l'eau ou de l'huile. Ce circuit **60** est prévu pour maintenir la température de la paroi **6** à une température sensiblement constante, soit basse (typiquement de l'ordre de 10°C) pour assurer un refroidissement du récipient **2** tout juste formé, soit élevée (typiquement de l'ordre de 120°C) pour assurer une thermofixation du récipient **2** et accroître ainsi, par voie thermique, sa cristallinité (et donc sa résistance mécanique).

Comme on le voit sur la **FIG.10,** le circuit **60** fluidique inclut des canaux **61** percés dans la paroi **6** du moule **5** et s'étend entre une ouverture **62** d'alimentation et une ouverture **63** d'évacuation pratiquées dans la face **48** supérieure du moule **5.** En d'autres termes, le circuit **60** fluidique débouche, par l'ouverture **62** d'alimentation et par l'ouverture **63** d'évacuation, sur la face **48** supérieure du moule **5.**

Pour des raisons de commodité de fabrication (par perçage), les canaux **61** sont subdivisés en plusieurs sections, tout particulièrement :

- une section **61A** amont, qui débouche sur l'ouverture **62** d'alimentation et inclut plusieurs alésages pratiqués verticalement, horizontalement et/ou obliquement dans la paroi **6** ;
- une section **61B** aval, qui débouche sur l'ouverture **63** d'évacuation et inclut également plusieurs alésages pratiqués verticalement, horizontalement et/ou obliquement dans la paroi **6** et qui communique avec la section **61A** amont dans une zone médiane du moule **5.**

Comme on peut le voir sur la **FIG.10** où ils sont visibles par transparence en pointillés, les canaux **61** sont percés de manière à contourner l'évidement **15** et à ne pas croiser les conduits **46, 50** du circuit **45** fluidique pneumatique.

Comme on le voit sur la **FIG.1** et sur la **FIG.10,** l'unité **1** de moulage comprend un raccord **64** fluidique monté sur la face **48** supérieure du moule **5** pour assurer l'alimentation du circuit **60** fluidique en liquide frais (ou, respectivement, réchauffé) et assurer l'évacuation de celui-ci du liquide réchauffé (ou refroidi), après qu'il a effectué un échange thermique avec la paroi **6.**

A cet effet, le raccord **64** fluidique comprend une arrivée **65** fluidique (ici sous forme d'un conduit percé dans le raccord **64**) en communication avec l'ouverture **62** d'alimentation, et une sortie **66** fluidique (ici également sous forme d'un conduit percé dans le raccord **64**) en communication avec l'ouverture **63** d'évacuation.

Dans l'exemple illustré sur la **FIG.10,** les ouvertures **62, 63** sont distantes l'une de l'autre, et débouchent sur la face **48** supérieure de manière sensiblement diamétralement opposée. Afin de permettre un raccordement fluidique simultané des ouvertures **62, 63** via un raccord **64** compact, le moule **5** comprend une gorge **67** creusée dans la face **48** supérieure, qui s'étend d'une extrémité **68** externe située au droit de l'ouverture **63** d'évacuation, jusqu'à une extrémité **69** interne située au voisinage de l'ouverture **62** d'alimentation.

Selon un mode de réalisation préféré, illustré sur la **FIG.1** et sur la **FIG.10,** où l'unité **1** de moulage est pourvue d'un couvercle **59** rapporté fixé sur la face **48** supérieure du moule **5,** ce couvercle **59** est interposé entre la face **48** supérieure et le raccord **64** fluidique.

Comme on peut le voir par transparence sur la **FIG.10,** le couvercle **59** est pourvu de perçages **70** à **73** de mise en communication de chaque raccord **53, 64** avec son circuit **45, 60** respectif.

De manière plus détaillée, le couvercle **59** comprend :

- un premier perçage **70** (oblique) de mise en communication de l'arrivée **54** primaire du raccord **53** pneumatique avec l'extrémité **47** amont du conduit **46** primaire ;
- un deuxième perçage **71** (vertical) de mise en communication de l'arrivée **56** secondaire du raccord **53** pneumatique avec l'extrémité **51** amont du conduit **50** secondaire ;
- un troisième perçage **72** (vertical) de mise en communication de l'arrivée **65** fluidique avec l'ouverture **62** d'alimentation ;
- un quatrième perçage **73** (vertical) de mise en communication de la sortie **66** fluidique avec l'ouverture **63** d'évacuation. Dans l'exemple illustré, le quatrième perçage **73** débouche au droit de l'extrémité **69** interne de la gorge **67,** via laquelle le quatrième perçage **73** est en communication fluidique avec l'ouverture **63** d'évacuation.

L'étanchéité aux gaz et aux liquides (typiquement à l'air et à l'eau) de l'interface entre le couvercle **59** et la face **48** supérieure est assurée, autour des extrémités **47, 51** amont des conduits **46, 50** et autour des ouvertures **62, 63** (et plus précisément autour de la gorge **67**), au moyen de joints **74** en élastomère, par exemple en silicone ou en caoutchouc naturel ou synthétique.

La fixation du couvercle **59** sur la face **48** supérieure du moule **5** peut, comme dans l'exemple illustré, être assurée au moyen de vis **75**.

Le fait que le circuit **45** pneumatique et le circuit **60** fluidique débouchent tous deux sur la face **48** supérieure du moule **5** permet de déporter sur celle-ci les branchements d'alimentation des circuits **45, 60**, et procure de ce fait au moins trois avantages :

- d'abord, il n'est pas nécessaire de ménager des accès latéraux aux flexibles d'amenée (et d'évacuation), ce qui simplifie l'architecture de l'unité **1** de moulage, et en particulier des pièces de support du moule **5** ;
- ensuite, l'encombrement radial de l'unité **1** de moulage est réduit ;
- enfin, les branchements par la face **48** supérieure sont plus simples et aisés pour tout technicien chargé de la maintenance de l'unité **1** de moulage.

Par ailleurs, pour assurer le positionnement précis de l'insert **12** par rapport à la cavité **7**, et pour limiter en outre l'usure de l'actionneur **16** et du moule **5**, chaque dispositif **11** de boxage comprend avantageusement une paire de silentblocs **76, 77** rapportés, fixés sur l'actionneur **16** de part et d'autre du piston **17**, à savoir :

- un silentbloc **76** arrière fixé sur le piston **17** au moyen de vis **78**, et qui, en position rétractée de l'insert **12**, est pris en sandwich entre le piston **17** et la paroi **18** de fond (**FIG.6, FIG.8**) ;
- un silentbloc **77** avant emmanché sur la tige **34** et fixé sur le piston **17** au moyen de vis **78** et qui, en position déployée de l'insert **12**, est pris en sandwich entre le piston **17** et la cloison **42** (**FIG.7, FIG.9**).

Selon un mode préféré de réalisation, chaque silentbloc **76, 77** est réalisé en polyuréthane, de préférence dans une nuance de polyuréthane commercialisée par la société Trelleborg sous la dénomination Zurcon Z20 (marque déposée). Ce matériau présente le double avantage d'une grande dureté (au bénéfice de la précision de positionnement de l'insert **12**) et d'une bonne résistance à l'usure, au bénéfice de la fiabilité et de la durabilité du dispositif **11** de boxage.

Le montage de chaque dispositif **11** de boxage dans chaque demi-moule **5A, 5B** est illustré sur les **FIG.2** et **FIG.3**.

Les silentblocs **76, 77** sont fixés sur l'actionneur **16** au moyen des vis **78** ; la goupille **38** est emmanchée dans le trou **39** et la vis **35** de fixation de l'insert **12** introduite dans l'actionneur **16** jusqu'à faire saillie de l'extrémité de la tige **34**. Le piston **17** est alors inséré dans la chemise **14**, puis celle-ci, équipée de ses joints **27** d'étanchéité, est introduite, par l'extérieur du moule **5**, dans son évidement **15** suivant l'axe **T** transversal, la tige **34** étant insérée dans l'alésage **43**.

La chemise **14** est fixée sur la paroi **6** latérale du moule au moyen des brides **28**, qui sont montées dans leurs réserves **32** respectives et vissées sur la paroi **6** latérale. L'insert **12** est monté par l'intérieur du demi-moule **5A, 5B** en étant introduit dans le logement **9** suivant l'axe **T** transversal jusqu'au contact avec l'extrémité de la tige **34**, la goupille **38** venant se loger dans le trou **40** pratiqué dans la face **37** arrière de l'insert **12**.

La fixation de l'insert **12** sur la tige **34** est alors réalisée au moyen de la vis **35**, dont le serrage dans le trou **36** taraudé est assuré au moyen d'un tournevis ou d'une clé appropriée (selon l'empreinte formée dans la tête de vis) passant au travers d'une ouverture **79** pratiquée, suivant l'axe **T**, dans la paroi **18** de fond de la chemise **14**.

Une fois réalisée la fixation de l'insert **12** sur l'actionneur **16**, l'ouverture **79** est obturée de manière étanche au moyen d'un bouchon **80** emmanché ou vissé dans celle-ci, comme illustré sur les **FIG.6** à **FIG.9**.

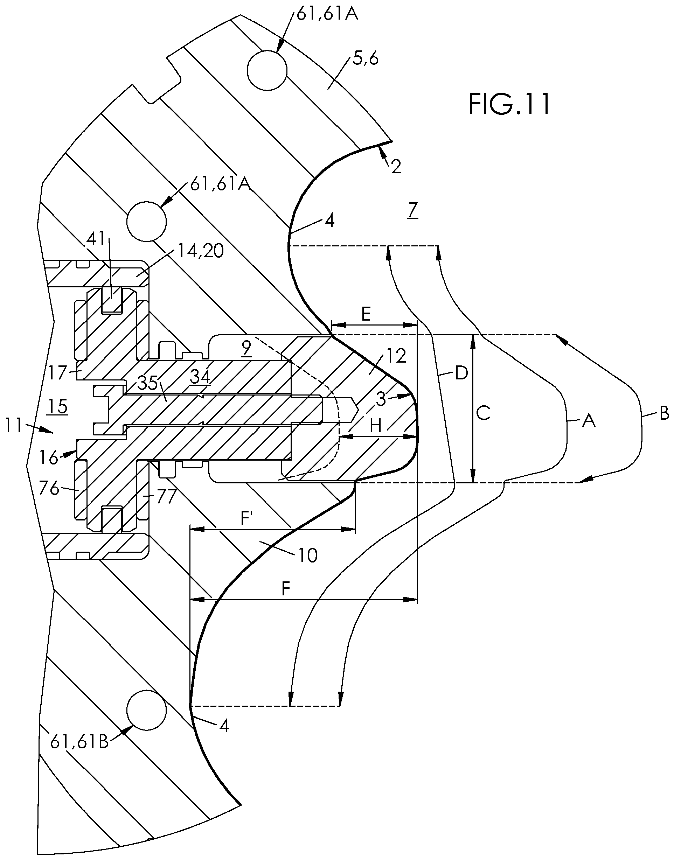

On a illustré sur les **FIG.11, FIG.12** et **FIG.14** le dimensionnement des parties de l'unité **1** de moulage permettant de former la réserve **3** en creux dans le récipient **2**.

Dans ce cadre, on note :

A    la longueur de corde cumulée, mesurée dans un plan horizontal contenant l'axe **T** transversal, de l'excroissance **10** et de la saillie formée par l'insert **12** en position déployée ;

B    la longueur de corde, également mesurée dans un plan horizontal contenant l'axe **T** transversal, de la saillie formée par l'insert **12** en position déployée au-delà de l'excroissance **10** ;

C    la largeur, mesurée horizontalement (c'est-à-dire perpendiculairement à l'axe **X** principal), de l'insert **12** ;

D    la longueur de corde, mesurée dans un plan horizontal contenant l'axe **T**, de l'excroissance **10**, en position rétractée de l'insert **12** ;

E    l'extension transversale (mesurée selon l'axe **T**) maximale de la saillie formée par l'insert **12** au-delà de l'excroissance **10** ;

F    l'extension transversale (mesurée selon l'axe **T**) maximale cumulée de l'excroissance **10** et de la saillie formée au-delà de l'excroissance **10** par l'insert **12** en position déployée ;

*F'*    l'extension transversale (mesurée selon l'axe **T**) maximale de l'excroissance **10** seule ;

*G*    la largeur, mesurée transversalement, de la partie **4B** arrière du corps **4** (la largeur G est considérée indifféremment sur le récipient **2** ou sur son empreinte dans le moule **5**) ;

*H*    la course de l'insert **12** (ou du piston **17**), mesurée en mm entre la position rétractée (en pointillés sur la FIG. 11) et la position déployée (en trait plein sur la **FIG.11**) ;

*I*    sur le récipient **2,** le décalage, mesuré dans un plan horizontal, entre l'axe **X** (considéré dans le récipient **2**) et le fond de la réserve **3** en creux ; dans le moule **5,** *I* correspond sensiblement au décalage, mesuré dans un plan horizontal, entre l'axe **X** (considéré dans le moule **5**) et l'axe **T** transversal.

Les extensions *E, F* et *F'* sont dites « maximales » pour témoigner du cas, comme celui illustré sur la **FIG.11,** où la réserve **3,** et l'excroissance **10** et l'insert **12,** ne présentent pas de symétrie par rapport à un plan vertical contenant l'axe **T** transversal. C'est pourquoi les extensions *E* et *F* sont mesurées du côté de l'insert **12** (respectivement du côté de l'excroissance **10**) maximisant leur valeur, comme l'illustre la **FIG.11.**

Comme on l'a déjà vu, l'excroissance **10** forme une partie de la contre-empreinte de la réserve **3** en creux dans le récipient **2.** En position rétractée de l'insert **12,** l'extension *F'* transversale de l'excroissance **10** seule est telle qu'il persiste entre les excroissances **10** en regard un interstice dont la largeur, mesurée transversalement et notée *K,* est suffisante pour permettre, au cours du soufflage, le passage, lors de son expansion, de la préforme à partir de laquelle le récipient **2** est formé. Cette largeur *K* est typiquement de l'ordre de 40 mm.

Cela permet de limiter la course *H* de l'insert **12** et donc l'encombrement radial du dispositif **11** de boxage, au bénéfice de la compacité de l'unité **1** de moulage.

En pratique, la course *H* de l'insert **12** de sa position rétractée à sa position déployée est faible, c'est-à-dire qu'elle est inférieure ou égale à 20 mm. Par ailleurs, cette course est avantageusement supérieure ou égale à 10 mm. La course *H* de l'insert **12** est typiquement de l'ordre de 15 mm.

L'extension *F* transversale cumulée de l'excroissance **10** et de l'insert **12** en position déployée est telle qu'il persiste, en position déployée des deux inserts **12,** un interstice entre eux, de sorte que chaque réserve **3** en creux est borgne. En d'autres termes, la poignée formée dans le récipient **2** par les deux réserves **3** en creux dos à dos n'est pas traversante, comme illustré sur la **FIG.14.** On note *J* la largeur, mesurée transversalement, de l'interstice entre les inserts **12** en regard en position déployée. Cette largeur *J* est typiquement de l'ordre de 15 mm, ce qui correspond à la distance entre les deux réserves **3** en creux formant conjointement la poignée du récipient **2.**

Les extensions *E* et *F* sont telles que *E* est inférieure ou égale à 85% de *F* :

$$E \leq 0{,}85 \cdot F$$

Bien que limitée, la saillie formée au-delà de l'excroissance **10** par l'insert **12** en position déployée permet d'approfondir la réserve **3** malgré une course *H* faible.

Par ailleurs, la réserve **3** doit être suffisamment profonde pour faciliter la préhension du récipient **2.** A cet effet, l'extension *E* transversale est avantageusement supérieure ou égale à 30% de l'extension *F* transversale cumulée :

$$E \geq 0{,}3 \cdot F$$

Plus précisément, l'extension *E* transversale est de préférence inférieure ou égale à 35 mm :

$$E \leq 35\,mm$$

A contrario, cette extension *E* transversale est de préférence supérieure ou égale à 10 mm :

$$E \geq 10\,mm$$

En outre, l'extension *E* transversale est de préférence inférieure ou égale à 45 mm auxquels est soustraite la valeur du décalage *I* :

$$E \leq 45\,mm - I$$

De même, il est avantageux de borner la longueur *B* de corde de la saillie formée par l'insert **12** en position déployée en fonction de la longueur A de corde cumulée de l'excroissance **10** et de la saillie formée par l'insert **12.**

Ainsi, *B* est de préférence inférieure ou égale à 80% de *A* :

$$B \leq 0{,}8 \cdot A$$

De cette façon, la quantité de matière qui subit l'étirage dû au boxage demeure limitée en extension verticale (selon l'axe **X**).

Par ailleurs, *B* est de préférence supérieure ou égale à 35% de *A* :

$$B \geq 0{,}35 \cdot A$$

Cela permet, malgré tout, d'étirer suffisamment la matière sans toutefois l'étirer au point d'en dégrader l'aspect visuel (le phénomène de surétirage se traduit par une coloration blanchâtre de la matière).

On peut également dimensionner l'insert **12** en liant sa longueur *B* de corde à sa largeur *C*.

Ainsi, le rapport entre la longueur *B* de corde et la largeur *C* est avantageusement inférieur ou égal à 2,3 :

$$B \leq 2{,}3 \cdot C$$

A contrario, ce rapport est avantageusement supérieur ou égal à 1,3 :

$$B \geq 1{,}3 \cdot C$$

On peut en outre dimensionner l'insert **12** en liant sa longueur *B* de corde à son extension *E* transversale.

Ainsi, le rapport entre la longueur *B* de corde de la saillie formée par l'insert **12** en position déployée et son extension *E* transversale est de préférence inférieur ou égal à 3,5 :

$$B \leq 3{,}5 \cdot E$$

A contrario, ce rapport est avantageusement supérieur ou égal à 2,2 :

$$B \geq 2{,}2 \cdot E$$

Plus précisément, la longueur *B* de corde de la saillie formée par l'insert **12** en position déployée est de préférence inférieure ou égale à 75 mm :

$$B \leq 75 \, mm$$

A contrario, la longueur *B* de corde de la saillie formée par l'insert **12** en position déployée est de préférence supérieure ou égale à 50 mm :

$$B \geq 50 \, mm$$

Il peut être avantageux de lier la longueur *A* de corde cumulée à l'extension *F* transversale cumulée.

Plus précisément, le rapport entre la longueur *A* de corde cumulée à l'extension *F* transversale cumulée est de préférence inférieur ou égal à 3,3 :

$$A \leq 3{,}3 \cdot F$$

A contrario, ce rapport est avantageusement supérieur ou égal à 2 :

$$A \geq 2 \cdot F$$

On récapitule, dans le tableau ci-dessous, des exemples de plages de valeurs (en millimètres) pour les paramètres A à J :

| Paramètre | Valeur min. (exemple) | Valeur max. (exemple) |
|---|---|---|
| A | 80 | 120 |
| B | 50 | 75 |
| C | 25 | 40 |
| D | 60 | 100 |
| E | 10 | 35 |
| F | 30 | 50 |
| G | 45 | 70 |
| H | 10 | 20 |
| I | 0 | 45 |
| J | 14 | 25 |

Pour former un récipient **2,** on procède comme suit.

On commence par introduire dans le moule **5,** en position ouverte de celui-ci, une ébauche préalablement chauffée à une température supérieure à la température de transition vitreuse de sa matière (typiquement, une ébauche en PET, dont la température de transition vitreuse est de l'ordre de 80°C, est chauffée à une température de 120°C environ). Chaque insert **12** est alors dans sa position rétractée.

Le moule **5** est ensuite refermé, et un fluide (notamment de l'air) sous pression (par ex. d'environ 7 à 15 bars) est injecté dans l'ébauche, laquelle est, de préférence, simultanément étirée au moyen d'une tige coulissante. Sous la pression, la matière de l'ébauche est amenée au voisinage de la paroi **6** latérale et du fond **8** de moule, sans toutefois y être appliquée de manière intime. Comme illustré sur les **FIG.6** et **FIG.8,** il se peut que, sous la pression, la matière se déploie quelque peu dans le logement **9** en venant éventuellement partiellement s'appliquer partiellement contre la face **13** frontale de l'insert **12.**

Chaque insert **12** est ensuite déplacé vers sa position déployée. A cet effet, un fluide sous pression (ici de l'air à une pression élevée, supérieure ou égale à 20 bars et typiquement de l'ordre de 40 bars) est injecté, via le conduit **46** primaire et la rainure **23** arrière, dans la demi-chambre **22A** arrière, cependant que le fluide présent dans la demi-chambre **22B** avant est simultanément évacué, via la rainure **25** avant, par le conduit **50** secondaire. Sous la différence de pression entre la demi-chambre **22A** arrière et la demi-chambre **22B** avant, le piston **17** est, avec l'insert **12** dont il est solidaire, déplacé transversalement en direction de la cavité **7,** jusqu'à venir buter, par l'intermédiaire du silentbloc **77** avant, contre la cloison **42,** qui détermine ainsi la fin de course de l'insert **12** en position déployée.

L'insert **12** repousse la matière à la manière d'un poinçon (sans toutefois la perforer) jusqu'à atteindre sa position déployée, la poignée étant alors formée en creux dans le corps **4** du récipient **2** (**FIG.7** et **FIG.9**).

En même temps que l'insert **12** est déplacé vers sa position déployée, la pression dans le récipient **2** est augmentée (typiquement jusqu'à une valeur comprise entre 20 et 40 bars environ) pour améliorer la prise d'empreinte du récipient **2** contre la paroi **6** latérale et le fond **8** de moule. La paroi **6** latérale et le fond **8** de moule étant régulés thermiquement, le maintien d'un contact intime de la matière contre ceux-ci favorise le refroidissement (ou, dans le cas d'une thermofixation, la chauffe) du récipient **2,** au bénéfice de sa rigidité mécanique.

Après une temporisation (de quelques dixièmes de secondes), le récipient est dépressurisé, le moule **5** est ouvert et le récipient **2** est évacué du moule **5.**

L'insert **12** est replacé dans sa position rétractée avant ou après l'ouverture du moule **5.** A cet effet, le fluide sous pression est injecté, via le conduit **50** secondaire et la rainure **25** avant, dans la demi-chambre **22B** avant, cependant que le fluide présent dans la demi-chambre **22A** arrière est simultanément évacué, via la rainure **23** arrière, par le conduit **46** primaire. Sous la différence de pression entre la demi-chambre **22B** avant et la demi-chambre **22A** arrière, le piston **17** est, avec l'insert **12** dont il est solidaire, déplacé transversalement vers l'extérieur du moule **6,** jusqu'à venir buter, par l'intermédiaire du silentbloc **76** arrière, contre la paroi **18** de fond qui détermine la fin de course de l'insert **12** en position rétractée.

Par comparaison avec un dispositif de boxage ordinaire dans lequel le piston **17** serait directement monté dans un évidement pratiqué dans le moule **5,** la présence de la chemise **14** rapportée, qui fait office de pièce d'usure, limite (voire supprime) l'usure de la paroi **6** latérale du moule **5,** au bénéfice de la fiabilité de l'unité **1** de moulage.

Par ailleurs, l'intégration du circuit **45** fluidique dans le moule **5,** et plus précisément la réalisation des conduits **46, 50** d'alimentation dans la paroi **6** latérale du moule **5,** avec des branchements réalisés sur la face **48** supérieure de celui-ci, limite l'encombrement transversal du moule **5** au bénéfice de la compacité générale de l'unité **1** de moulage.

La séparation de l'évidement **15** du logement **9** par la cloison **42** et le montage de l'insert **12** par l'intérieur du demi-moule **5A** (ou **5B**) permettent de réaliser une bonne étanchéité des demi-chambres **22A, 22B,** au bénéfice de l'efficacité du dispositif **11** de boxage, et donc d'améliorer la qualité du récipient **2.**

La forme asymétrique (ici ovale) de l'insert **12** et de la chemise **14** évite la rotation de l'insert **12,** au bénéfice d'une bonne prise d'empreinte de la réserve **3** en creux. La distribution préférentielle uniforme des ouvertures **24** (et des échancrures **26**) permet d'assurer une bonne répartition de la pression dans la demi-chambre **22A** arrière (respectivement dans la demi-chambre **22B** avant), au bénéfice de la précision de guidage de l'insert **12** et d'une bonne prise d'empreinte de la réserve **3** en creux.

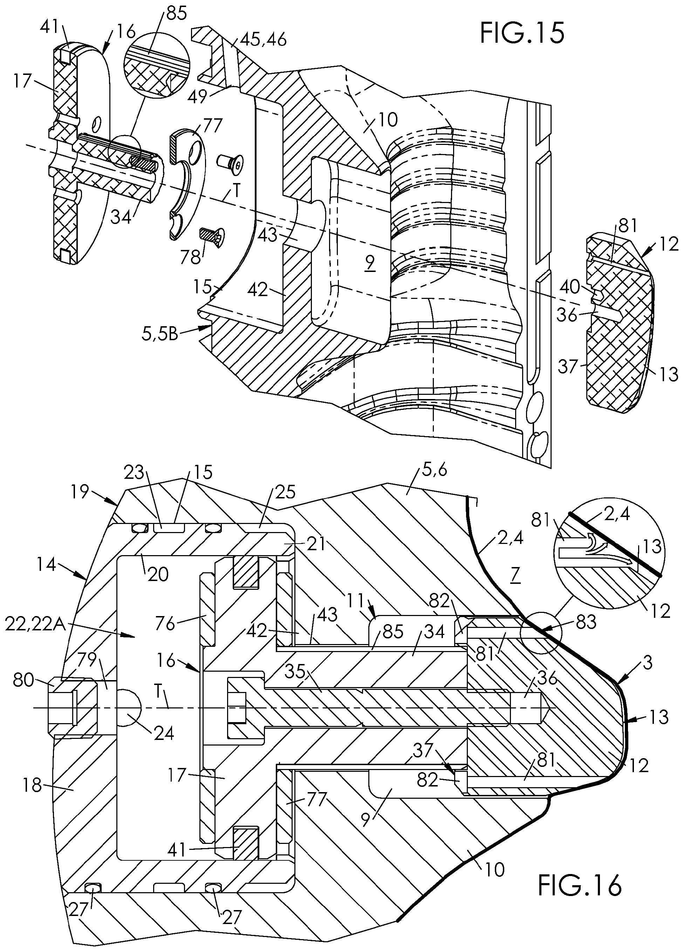

On a représenté sur les **FIG.15** à **FIG.18** une variante de réalisation de l'unité **1** de moulage.

Cette variante reprend toutes les caractéristiques de l'unité **1** de moulage décrite ci-dessus, à l'exception des caractéristiques supplémentaires ou modifiées suivantes.

Premièrement, l'insert **12** est pourvu d'au moins un canal **81** qui s'étend d'une extrémité **82** arrière, par laquelle il débouche dans le logement **9,** à une extrémité **83** avant par laquelle il débouche sur la face **13** frontale.

Selon un premier mode de réalisation, le (ou chaque) canal **81** peut être creusé dans le pourtour de l'insert **12,** sous forme de rainure (ou cannelure). Selon un mode préféré de réalisation illustré sur les **FIG.15** à **FIG.18,** le (ou chaque) canal **81** est percé dans la masse de l'insert **12.**

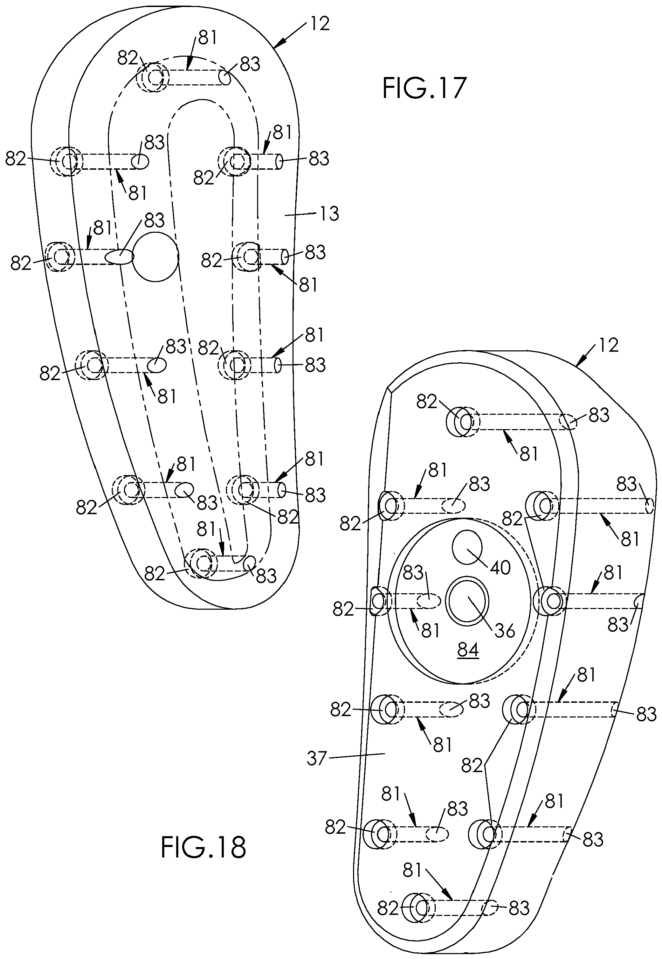

Dans ce cas, et comme cela est bien visible sur la **FIG.18,** le (ou chaque) canal **81** débouche sur la face **37** arrière de l'insert **12.**

Selon un mode de réalisation illustré sur les **FIG.17** et **FIG.18,** l'insert comprend une pluralité de canaux **81.** Ces canaux **81** sont avantageusement répartis autour de la tige **34** lorsque celle-ci est fixée sur l'insert **12.** Dans l'exemple illustré, où l'insert **12** est pourvu d'un lamage **84** dans lequel est emboîtée la tige **34,** on voit que les canaux **81** sont répartis autour de ce lamage **84.**

Deuxièmement, la demi-chambre **22B** avant est en communication fluidique avec le logement **9.**

A cet effet, la tige **34** est cannelée, c'est-à-dire qu'elle est pourvue de cannelures **85** pratiquées dans sa face externe parallèlement à son axe (parallèlement à l'axe **T**).

Ces cannelures **85** facilitent la communication fluidique entre la demi-chambre **22B** avant et le logement **9.**

Ces dispositions permettent de réaliser, via la demi-chambre **22B** avant, les cannelures **85,** le logement **9** et le canal (ou les canaux) **81,** une circulation de fluide (c'est-à-dire d'air si le fluide employé est de l'air) qui :

- favorise le refroidissement (ou la régulation thermique) de l'insert **12,**
- facilite le refroidissement de la matière du récipient **2** ainsi que son décollement de la face **13** frontale de l'insert **12** lors du retrait de celui-ci.

Cette circulation de fluide est réalisée lors de l'injection de fluide dans la demi-chambre **22B** avant commandant le mouvement de retrait du piston **17** (et donc de l'insert **12**) : une partie du fluide injecté fuit dans le logement **9** via les cannelures **85** et s'introduit dans le canal (les canaux) **81** par l'extrémité **82** arrière pour déboucher sur la face **13** frontale par l'extrémité **83** avant, comme illustré par les flèches dans le médaillon de détail de la **FIG.16.**

En limitant l'échauffement de l'insert **12,** alors même que la paroi **6** latérale du moule **5** est refroidie, on évite, d'une part, la montée de la température de l'insert au-dessus de la température de transition vitreuse (Tg) de la matière thermoplastique constitutive du récipient et, d'autre part, une dilatation de l'insert **12** qui empêcherait son bon coulissement dans le logement **9.** La lame d'air créée entre la face **13** frontale de l'insert **12** et le récipient **2** permet de préserver la forme de la réserve **3** en creux formée dans le récipient **2** par l'insert **12** dans sa position déployée.

Plus précisément, l'injection de fluide à basse pression dans la demi-chambre **22B** avant (et donc dans le logement **9**) est réalisée avant que l'injection de fluide à haute pression dans la demi-chambre **22A** arrière ne soit stoppée. La circulation de fluide sur la face **13** frontale de l'insert **12** débute donc avant le retrait de celui-ci. L'air circule par conséquent entre le récipient **2** soufflé et l'insert **12,** et assure un refroidissement de celui-ci.

La pression dans le récipient **2** est ensuite relâchée, puis la pression dans la demi-chambre **22A** arrière est également relâchée. La pression dans la demi-chambre **22B** avant étant maintenue, l'insert **12** est déplacé depuis sa position déployée vers sa position rétractée et ensuite, la pression dans la demi-chambre **22B** avant est relâchée.

Cette architecture, et le mode de fonctionnement qui vient d'être décrit, permet de simplifier la structure du moule puisque les conduits de pressurisation de la demi-chambre **22B** avant sont mis à profit pour assurer le refroidissement de l'insert **12,** ce qui évite de recourir à des dispositions dédiées (par ex. un conduit spécifique d'amenée de fluide caloporteur). Par ailleurs, comme le récipient **2** est mis à profit pour générer un effet de mur de guidage des flux d'air qui se répartissent en lame léchant la face **13** frontale, il en résulte une bonne efficacité du refroidissement. De la sorte, la température de l'insert **12** peut être maintenue constamment au-dessous de la température de transition vitreuse de la matière du récipient **2.**

**Revendications**

1.  Unité **(1)** de moulage pour le formage d'un récipient **(2)** muni d'une réserve **(3)** formée en creux vers l'intérieur du récipient **(2),** cette unité **(1)** de moulage comprenant :

    - un moule **(5)** muni d'une paroi **(6)** latérale définissant une cavité **(7)** à l'empreinte d'au moins une partie du récipient **(2),** cette paroi **(6)** latérale étant pourvue d'un logement **(9)** débouchant dans la cavité **(7)** ;
    - un dispositif **(11)** de boxage comprenant :

      o un insert **(12)** monté en translation par rapport à la paroi **(6)** latérale suivant un axe **(T)** transversal entre une position rétractée dans laquelle l'insert **(12)** est au moins en partie escamoté dans le logement **(9),** et une position déployée dans laquelle l'insert **(12)** fait au moins en partie saillie dans la cavité **(7)** hors du logement **(9),**
      o un actionneur **(16)** solidaire de l'insert **(12)** et muni d'un piston **(17)** ;

    - le dispositif (**11**) de boxage comprenant une chemise **(14)** rapportée, montée dans un évidement **(15)** complémentaire formé dans la paroi **(6)** latérale et fixée à celle-ci, et dans laquelle le piston **(17)** est monté en translation, la chemise **(14)** définissant une chambre **(22)** subdivisée par le piston **(17)** en une demi-chambre **(22A)** arrière et une demi-chambre **(22B)** avant ;
    - l'évidement **(15),** la chemise **(14)** et le piston **(17)** sont asymétriques de révolution autour de l'axe **(T)** transversal ;
    - le dispositif **(11)** de boxage comprenant un circuit **(45)** fluidique de commande du déplacement du piston **(17),** qui inclut au moins un conduit **(46)** primaire d'alimentation de la demi-chambre **(22A)** arrière, qui communique avec celle-ci par plusieurs ouvertures **(24)** dans la chemise **(14),** distribuées sur la périphérie de celle-ci.

2.  Unité **(1)** de moulage selon la revendication 1, **caractérisée en ce que** l'évidement **(15),** la chemise **(14)** et le piston **(17)** sont plus hauts que larges.

3.  Unité **(1)** de moulage selon la revendication 1, **caractérisée en ce que** l'évidement **(15),** la chemise **(14)** et le piston **(17)** présentent un contour ovale de grand axe sensiblement vertical.

4.  Unité **(1)** de moulage selon la revendication 1, **caractérisée en ce que** la chemise **(14)** comprend au moins deux ouvertures **(24)** diamétralement opposées suivant un axe vertical.

5.  Unité (**1**) de moulage selon l'une des revendications précédentes, **caractérisée en ce que** la chemise **(14)** comprend quatre ouvertures **(24)** réparties à 90° autour de l'axe **(T)** transversal.

6.  Unité **(1)** de moulage selon l'une des revendications précédentes, **caractérisée en ce que** la chemise **(14)** comprend une paroi **(18)** de fond et un cylindre **(20)** qui fait saillie de la paroi **(18)** de fond et se termine par un rebord **(21),** la paroi **(18)** de fond et le cylindre **(20)** définissant intérieurement la chambre **(22).**

7.  Unité **(1)** de moulage selon la revendication 6, **caractérisée en ce que** la chemise **(14)** est pourvue, sur une face périphérique externe du cylindre **(20),** d'une rainure **(23)** arrière qui débouche dans la chambre **(22)** par les ouvertures **(24),** et **en ce que** le conduit **(46)** fluidique primaire est pratiqué dans la paroi **(6)** du moule **(5)** et débouche dans l'évidement **(15)** au droit de la rainure **(23)** arrière.

8.  Unité **(1)** de moulage selon la revendication 6 ou 7, **caractérisée en ce que** le circuit **(45)** fluidique de commande du déplacement du piston **(17)** inclut un conduit **(50)** secondaire d'alimentation de la demi-chambre **(22B)** avant, qui communique avec celle-ci par des échancrures **(26)** pratiquées dans le rebord **(21).**

9. Unité **(1)** de moulage selon la revendication 8, **caractérisée en ce que** la chemise **(14)** est pourvue, sur une face périphérique externe du cylindre **(20),** d'une rainure **(25)** avant qui débouche dans la chambre **(22)** par les échancrures **(26),** et **en ce que** le conduit **(50)** fluidique secondaire est percé dans la paroi **(6)** du moule **(5)** et débouche dans l'évidement **(15)** au droit de la rainure **(25)** avant.

10. Unité (**1**) de moulage selon l'une des revendications précédentes, **caractérisée en ce que** l'évidement **(15)** est séparé du logement **(9)** par une cloison **(42)** percée d'un alésage **(43)**, et **en ce que** l'actionneur **(16)** est pourvu d'une tige **(34)** montée en translation dans cet alésage **(43)** et sur laquelle est fixé l'insert **(12).**

11. Unité (**1**) de moulage selon la revendication 10, **caractérisée en ce que** l'insert **(12)** est fixé sur la tige **(34)** par vissage.

12. Unité **(1)** de moulage selon la revendication 11, **caractérisée en ce que** l'insert **(12)** est fixé sur la tige **(34)** au moyen d'une vis **(30)** traversant le piston **(17)** et la tige **(34)** et venant en prise hélicoïdale avec un trou **(36)** taraudé pratiqué dans une face **(37)** arrière de l'insert **(12).**

13. Unité **(1)** de moulage selon l'une des revendications 10 à 12, **caractérisée en ce que** l'insert **(12)** est immobilisé en rotation par rapport à l'actionneur **(16)** au moyen d'une goupille **(38).**

14. Unité **(1)** de moulage selon l'une des revendications précédentes, **caractérisée en ce que** le ou chaque conduit **(46, 50)** fluidique débouche sur une face **(48)** supérieure du moule **(5).**

15. Unité (**1**) de moulage selon l'une des revendications précédentes, **caractérisée en ce que** le dispositif **(11)** de boxage comprend une paire de silentblocs **(54, 55)** rapportés, fixés sur l'actionneur **(16)** de part et d'autre du piston **(17).**

16. Unité **(1)** de moulage selon la revendication 15, **caractérisée en ce que** les silentblocs sont réalisés en polyuréthane.

17. Unité (**1**) de moulage selon l'une des revendications précédentes, **caractérisée en ce que** la chemise **(14)** est fixée à la paroi **(6)** latérale du moule **(5)** au moins au moyen d'une bride **(28),** comprenant un corps **(29)** fixé sur le moule **(5)** par vissage, et d'une languette **(31)** faisant saillie du corps **(29)** et prenant appui contre une face externe de la chemise **(14).**

18. Unité **(1)** de moulage selon l'une des revendications précédentes, **caractérisée en ce que** la chemise **(14)** est réalisée en acier.

19. Unité **(1)** de moulage selon l'une des revendications précédentes, **caractérisée en ce que** l'actionneur **(16)** est réalisé en aluminium.

20. Unité **(1)** de moulage selon l'une des revendications précédentes, **caractérisée en ce qu'**elle est équipée d'une paire de dispositifs **(11)** de boxage symétriques dont les inserts **(12)** sont placés en regard l'un de l'autre.


**Patentansprüche**

1. Formeinheit (1) zum Formen eines Behälters (2), der mit einer Durchgangsausnehmung (3) ausgestattet ist, die zum Inneren des Behälters (2) hin eingeformt ist, wobei diese Formeinheit (1) umfasst:

   - ein Formwerkzeug (5), das mit einer Seitenwand (6) ausgestattet ist, die einen Hohlraum (7) mit dem Formabdruck wenigstens eines Teils des Behälters (2) definiert, wobei diese Seitenwand (6) mit einer Aufnahme (9) versehen ist, die in den Hohlraum (7) mündet;
   - eine Boxing-Vorrichtung (11), welche umfasst:

   o einen Einsatz (12), der bezüglich der Seitenwand (6) entlang einer quer verlaufenden Achse (T) verschiebbar zwischen einer zurückgezogenen Position, in welcher der Einsatz (12) wenigstens teilweise in die Aufnahme (9) versenkt ist, und einer ausgefahrenen Position, in welcher der Einsatz (12) wenigstens teilweise aus der Aufnahme (9) heraus in den Hohlraum (7) vorsteht, gelagert ist,
   o einen Aktuator (16), der mit dem Einsatz (12) fest verbunden und mit einem Kolben (17) ausgestattet ist;

- wobei die Boxing-Vorrichtung (11) eine angefügte Laufbuchse (14) umfasst, die in einer komplementären Aussparung (15) angebracht ist, die in der Seitenwand (6) ausgebildet ist, und an Letzterer befestigt ist, und in welcher der Kolben (17) verschiebbar gelagert ist, wobei die Laufbuchse (14) eine Kammer (22) definiert, die durch den Kolben (17) in eine hintere Halbkammer (22A) und eine vordere Halbkammer (22B) aufgeteilt wird;

- wobei die Aussparung (15), die Laufbuchse (14) und der Kolben (17) rotationsasymmetrisch bezüglich der quer verlaufenden Achse (T) sind;

- wobei die Boxing-Vorrichtung (11) einen Fluidkreislauf (45) zur Steuerung der Verschiebung des Kolbens (17) umfasst, welcher wenigstens eine primäre Zuführleitung (46) für die hintere Halbkammer (22A) umfasst, welche mit Letzterer über mehrere Öffnungen (24) in der Laufbuchse (14) kommuniziert, die auf dem Umfang derselben verteilt sind.

2. Formeinheit (1) nach Anspruch 1, **dadurch gekennzeichnet, dass** die Aussparung (15), die Laufbuchse (14) und der Kolben (17) eine Höhe aufweisen, die größer als ihre Breite ist.

3. Formeinheit (1) nach Anspruch 1, **dadurch gekennzeichnet, dass** die Aussparung (15), die Laufbuchse (14) und der Kolben (17) eine ovale Kontur mit einer im Wesentlichen vertikalen Hauptachse aufweisen.

4. Formeinheit (1) nach Anspruch 1, **dadurch gekennzeichnet, dass** die Laufbuchse (14) wenigstens zwei Öffnungen (24) umfasst, die einander auf einer vertikalen Achse diametral gegenüberliegen.

5. Formeinheit (1) nach einem der vorhergehenden Ansprüche, **dadurch gekennzeichnet, dass** die Laufbuchse (14) vier Öffnungen (24) umfasst, die in 90°-Abständen um die quer verlaufende Achse (T) herum angeordnet sind.

6. Formeinheit (1) nach einem der vorhergehenden Ansprüche, **dadurch gekennzeichnet, dass** die Laufbuchse (14) eine Bodenwand (18) und einen Zylinder (20), der von der Bodenwand (18) aus vorsteht und in einem Rand (21) endet, umfasst, wobei die Bodenwand (18) und der Zylinder (20) innen die Kammer (22) definieren.

7. Formeinheit (1) nach Anspruch 6, **dadurch gekennzeichnet, dass** die Laufbuchse (14) auf einer äußeren Umfangsfläche des Zylinders (20) mit einer hinteren Nut (23) versehen ist, welche über die Öffnungen (24) in die Kammer (22) mündet, und dadurch, dass die primäre Fluidleitung (46) in der Wand (6) des Formwerkzeugs (5) ausgebildet ist und direkt an der hinteren Nut (23) in die Aussparung (15) mündet.

8. Formeinheit (1) nach Anspruch 6 oder 7, **dadurch gekennzeichnet, dass** der Fluidkreislauf (45) zur Steuerung der Verschiebung des Kolbens (17) eine sekundäre Zuführleitung (50) für die vordere Halbkammer (22B) umfasst, welche mit Letzterer über Ausnehmungen (26) kommuniziert, die in dem Rand (21) ausgebildet sind.

9. Formeinheit (1) nach Anspruch 8, **dadurch gekennzeichnet, dass** die Laufbuchse (14) auf einer äußeren Umfangsfläche des Zylinders (20) mit einer vorderen Nut (25) versehen ist, welche über die Ausnehmungen (26) in die Kammer (22) mündet, und dadurch, dass die sekundäre Fluidleitung (50) in der Wand (6) des Formwerkzeugs (5) ausgebildet ist und direkt an der vorderen Nut (25) in die Aussparung (15) mündet.

10. Formeinheit (1) nach einem der vorhergehenden Ansprüche, **dadurch gekennzeichnet, dass** die Aussparung (15) von der Aufnahme (9) durch eine Trennwand (42) getrennt ist, die mit einer Bohrung (43) versehen ist, und dadurch, dass der Aktuator (16) mit einer Stange (34) versehen ist, die in dieser Bohrung (43) verschiebbar gelagert ist und an welcher der Einsatz (12) befestigt ist.

11. Formeinheit (1) nach Anspruch 10, **dadurch gekennzeichnet, dass** der Einsatz (12) an der Stange (34) durch Verschraubung befestigt ist.

12. Formeinheit (1) nach Anspruch 11, **dadurch gekennzeichnet, dass** der Einsatz (12) an der Stange (34) mittels einer Schraube (30) befestigt ist, die den Kolben (17) und die Stange (34) durchquert und mit einer Gewindebohrung (36), die in einer hinteren Seite (37) des Einsatzes (12) ausgebildet ist, in Spiraleingriff gelangt.

13. Formeinheit (1) nach einem der Ansprüche 10 bis 12, **dadurch gekennzeichnet, dass** der Einsatz (12) gegen Verdrehung bezüglich des Aktuators (16) mittels eines Stifts (38) gesichert ist.

14. Formeinheit (1) nach einem der vorhergehenden Ansprüche, **dadurch gekennzeichnet, dass** die oder jede Fluidleitung (46, 50) an einer oberen Fläche (48) des Formwerkzeugs (5) mündet.

**15.** Formeinheit (1) nach einem der vorhergehenden Ansprüche, **dadurch gekennzeichnet, dass** die Boxing-Vorrichtung (11) ein Paar angesetzte Silentblöcke (54, 55) umfasst, die beiderseits des Kolbens (17) an dem Aktuator (16) befestigt sind.

**16.** Formeinheit (1) nach Anspruch 15, **dadurch gekennzeichnet, dass** die Silentblöcke aus Polyurethan hergestellt sind.

**17.** Formeinheit (1) nach einem der vorhergehenden Ansprüche, **dadurch gekennzeichnet, dass** die Laufbuchse (14) an der Seitenwand (6) des Formwerkzeugs (5) wenigstens mittels eines Flansches (28), der einen an dem Formwerkzeug (5) durch Verschraubung befestigten Körper (29) umfasst, und einer Lasche (31), die von dem Körper (29) vorsteht und sich an einer Außenfläche der Laufbuchse (14) abstützt, befestigt ist.

**18.** Formeinheit (1) nach einem der vorhergehenden Ansprüche, **dadurch gekennzeichnet, dass** die Laufbuchse (14) aus Stahl hergestellt ist.

**19.** Formeinheit (1) nach einem der vorhergehenden Ansprüche, **dadurch gekennzeichnet, dass** der Aktuator (16) aus Aluminium hergestellt ist.

**20.** Formeinheit (1) nach einem der vorhergehenden Ansprüche, **dadurch gekennzeichnet, dass** sie mit einem Paar von symmetrischen Boxing-Vorrichtungen (11) ausgestattet ist, deren Einsätze (12) einander gegenüberliegend angeordnet sind.

**Claims**

**1.** Moulding unit (1) for forming a container (2) provided with a reservation (3) formed as a recess towards the inside of the container (2), this moulding unit (1) comprising:

- a mould (5) equipped with a lateral wall (6) defining a cavity (7) that is the impression of at least part of the container (2), this lateral wall (6) being provided with a housing (9) opening into the cavity (7);
- a boxing device (11) comprising:

o an insert (12) mounted with the ability to move translationally with respect to the lateral wall (6) along a transverse axis (T) between a retracted position in which the insert (12) is at least partially retracted into the housing (9), and a deployed position in which the insert (12) at least partially project into the cavity (7) out of the housings (9),
o an actuator (16) secured to the insert (12) and equipped with a piston (17);

- the boxing device (11) comprising an attached sleeve (14) mounted in a complementary recess (15) formed in the lateral wall (6) and fixed to the latter, and in which the piston (17) is mounted with the ability to perform a translational movement, the sleeve (14) defining a chamber (22) subdivided by the piston (17) into a rear half-chamber (22A) and a front half-chamber (22B);
- the recess (15), the sleeve (14) and the piston (17) are asymmetric in terms of revolution about the transverse axis (T);
- the boxing device (11) comprising a fluid circuit (45) controlling the movement of the piston (17), which circuit includes at least one primary supply duct (46) supplying the rear half-chamber (22A), which communicates therewith via several openings (24) in the sleeve (14), which openings are distributed about the periphery of the sleeve.

**2.** Moulding unit (1) according to Claim 1, **characterized in that** the recess (15), the sleeve (14) and the piston (17) are taller than they are wide.

**3.** Moulding unit (1) according to Claim 1, **characterized in that** the recess (15), the sleeve (14) and the piston (17) have an oval contour with the major axis substantially vertical.

**4.** Moulding unit (1) according to Claim 1, **characterized in that** the sleeve (14) comprises at least two openings (24) which are diametrically opposite along a vertical axis.

5. Moulding unit (1) according to one of the preceding claims, **characterized in that** the sleeve (14) comprises four openings (24) distributed at 90° about the transverse axis (T).

6. Moulding unit (1) according to one of the preceding claims, **characterized in that** the sleeve (14) comprises an end wall (18) and a cylinder (20) which projects from the end wall (18) and ends in a rim (21), the end wall (18) and the cylinder (20) internally defining the chamber (22).

7. Moulding unit (1) according to Claim 6, **characterized in that** the sleeve (14) is provided, on an external peripheral face of the cylinder (20), with a rear groove (23) which opens into the chamber (22) via the openings (24), and **in that** the primary fluid duct (46) is made in the wall (6) of the mould (5) and opens into the recess (15) in line with the rear groove (23).

8. Moulding unit (1) according to Claim 6 or 7, **characterized in that** the fluid circuit (45) controlling the movement of the piston (17) includes a secondary supply duct (50) supplying the front half-chamber (22B) and which communicates therewith via notches (26) made in the rim (21).

9. Moulding unit (1) according to Claim 8, **characterized in that** the sleeve (14) is provided, on an external peripheral face of the cylinder (20), with a front groove (25) which opens into the chamber (22) via the notches (26), and **in that** the secondary fluid duct (50) is pierced in the wall (6) of the mould (5) and opens into the recess (15) in line with the front groove (25).

10. Moulding unit (1) according to one of the preceding claims, **characterized in that** the recess (15) is separated from the housing (9) by a partition (42) pierced with a bore (43), and **in that** the actuator (16) is provided with a rod (34) mounted with the ability to affect a translational movement in the bore (43) and to which the insert (12) is fixed.

11. Moulding unit (1) according to Claim 10, **characterized in that** the insert (12) is fixed to the rod (34) by screwing.

12. Moulding unit (1) according to Claim 11, **characterized in that** the insert (12) is fixed to the rod (34) by means of a screw (30) that passes through the piston (17) and the rod (34) and engages helicoidally with a tapped hole (36) made in a rear face (37) of the insert (12).

13. Moulding unit (1) according to one of Claims 10 to 12, **characterized in that** the insert (12) is prevented from rotating with respect to the actuator (16) by means of a pin (38).

14. Moulding unit (1) according to any one of the preceding claims, **characterized in that** the or each fluid duct (46, 50) opens onto an upper face (48) of the mould (5).

15. Moulding unit (1) according to any one of the preceding claims, **characterized in that** the boxing device (11) comprises a pair of attached damping blocks (54, 55) fixed to the actuator (16) on either side of the piston (17).

16. Moulding unit (1) according to Claim 15, **characterized in that** the damping blocks are made of polyurethane.

17. Moulding unit (1) according to any one of the preceding claims, **characterized in that** the sleeve (14) is fixed to the lateral wall (6) of the mould (5) at least by means of a flange (28), comprising a body (29) fixed to the mould (5) by screw fastening and of a tongue (31) projecting from the body (29) and bearing against an external face of the sleeve (14) .

18. Moulding unit (1) according to any one of the preceding claims, **characterized in that** the sleeve (14) is made of steel.

19. Moulding unit (1) according to any one of the preceding claims, **characterized in that** the actuator (16) is made of aluminium.

20. Moulding unit (1) according to any one of the preceding claims, **characterized in that** it is equipped with a symmetric pair of boxing devices (11), the inserts (12) of which are positioned facing one another.

FIG.1

FIG.2

FIG.3

FIG.4

FIG.5

FIG.7

FIG.6

FIG.8

FIG.9

FIG.10

FIG.11

FIG.12

FIG.13

FIG.14

EP 3 272 494 B1

FIG.15

FIG.16

FIG.17

FIG.18

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP H0866959 B
- WO 2010063900 A